# EUROPÄISCHE PATENTSCHRIFT

(11) **EP 0 673 874 B1**
(45) Veröffentlichungstag und Bekanntmachung des Hinweises auf die Patenterteilung: **15.09.1999**
(21) Anmeldenummer: 94104765.6
(22) Anmeldetag: 25.03.1994
(51) Int. Cl.: B66B 11/04, F16F 15/08

(54) **Antriebsmaschine für Aufzüge**
Drive device for elevator
Entraînement pour ascenseur

(43) Veröffentlichungstag der Anmeldung: 27.09.1995
(73) Patentinhaber: INVENTIO AG, CH-6052 Hergiswil NW (CH)
(72) Erfinder: Liebetrau, Christoph, CH-5737 Menziken (CH); Richter, Utz, CH-6030 Ebikon (CH)

(56) Entgegenhaltungen:
- EP-A- 0 079 420
- FR-A- 2 608 577
- US-A- 5 291 966
- PATENT ABSTRACTS OF JAPAN vol. 3, no. 137 (M-80) 14. November 1979 & JP-A-54 112 462 (MITSUBISHI ELECTRIC CORP.) 3. September 1979

## Beschreibung

Die Erfindung betrifft eine Antriebsmaschine für Aufzüge, mit einem Getriebe, einem Elektromotor, einer Bremse und einer Treibscheibe, die gleichachsig an einem Maschinengestell angeordnet sind.

Die häufigste Art von Getrieben für Aufzugsantriebe sind Schneckengetriebe, wobei die das Schneckenrad und die Treibscheibe tragende Achse in der Regel zwischen Schneckenrad und Treibscheibe und an ihren Enden gelagert ist. Es werden somit drei Lager mit mindestens drei Wälzlagern benötigt. Mit der DE-OS 43 12 201 ist eine Antriebsmaschine bekannt geworden, bei der die Achse zweifach gelagert ist. Hierbei ist das Schneckenrad fliegend angeordnet, während die Treibscheibe zwischen zwei Lagern eines Gehäuses liegend auf der Achse befestigt ist. Vorstehend beschriebene Getriebe haben den Nachteil, dass Ausrichtungs, bzw. Fluchtungsprobleme auftreten können und durch bei Achsdurchbiegungen entstehende Eingriffsfehler grössere Reibung erzeugt werden kann. Weiterhin können bei kurzen Spitzenbelastungen, wie beispielsweise bei Fang- und Puffertests, Zähne deformiert werden, da das kurzzeitig auftretende Moment das 10-fache des Nennmomentes betragen kann. Die hierbei entstehenden Teilungsfehler müssen durch erhöhten Abrieb in der Zone der deformierten Zähne ausgeglichen werden. Das Gleiche gilt auch für die Anfahrphase des Aufzuges, da bei kurzen Beschleunigungszeiten und hoher Massenträgheit grosse Belastungen auftreten können.

Bei einer mit der DE-PS-39 22 272 bekannt gewordenen Antriebsmaschine wird zwecks Verbesserung des vergleichsweise niedrigen Wirkungsgrades von Schneckengetrieben und Erzielung einer kompakteren Bauweise ein Planetengetriebe verwendet, das innerhalb der Treibscheibe plaziert ist. Die Treibscheibe ist mittels zweier Lager drehbar auf einer hohlen, zu beiden Seiten der Treibscheibe abgestützten Lagerachse gelagert, innerhalb welcher eine vom Motor angetriebene Antriebswelle zweifach gelagert ist. Die Antriebswelle weist eine Verzahnung auf, die mit Zwischenrädern im Eingriff ist, welche an Flanschen der Lagerachse drehbar gelagert sind. Die Zwischenräder stehen mit einer Innenverzahnung der Treibscheibe im Eingriff, so dass bei drehender Antriebswelle die Drehbewegung unter Reduktion der Drehzahl auf die Treibscheibe übertragen wird. Das Ende der Antriebswelle ist mit einer Scheibenbremse gekoppelt, die am Maschinengestell befestigt ist. Diese Antriebsmaschine ist relativ kompliziert aufgebaut, wobei der Zusammenbau bzw. die Demontage zwecks Unterhalt oder Reparaturen ziemlich zeitaufwendig ist. Ausserdem muss bei Antrieben mit Mehrfach-Lagerungen mit Ausrichtungs- bzw. Fluchtungsfehlern sowie mit Achsendurchbiegungen gerechnet werden, die sich nachteilig auf das Getriebe auswirken können.

Der Erfindung liegt die Aufgabe zugrunde eine Antriebsmaschine der eingangs genannten Art vorzuschlagen, welche die vorstehend genannten Nachteile nicht aufweist und wobei insbesondere Eingriffsfehler durch Achsdurchbiegung und Deformationen von Zähnen durch Spitzenbelastungen vermieden werden.

Diese Aufgabe wird durch die im Patentanspruch 1 dargelegte Erfindung gelöst. Hierbei ist die Treibscheibe auf einem Ende einer feststehenden Achse drehbar gelagert, die an einem mit dem Maschinengestell verbundenem Träger befestigt ist. Das Getriebe, der Elektromotor und die Bremse sind gleichachsig verlaufend fest miteinander verbunden und fliegend an der Treibscheibe angeordnet, wobei sie mit zwei am Maschinengestell befestigten elastischen Drehmomentenstützen in Verbindung stehen.

Die mit der Erfindung erzielten Vorteile sind darin zu sehen, dass nur ein Lager benötigt wird, so dass Kosten gespart werden und keine Achsdurchbiegungen mit nachteiligen Auswirkungen auf das Getriebe und andere Maschinenteile entstehen können. Da nur ein Lager vorhanden ist, werden Ausrichtungs- bzw. Fluchtungsprobleme vermieden, die sonst bei nicht zufriedenstellender Lösung zu zusätzlichem Materialverschleiss führen könnten. Mit den elastischen Drehmomentenstützen wird erreicht, dass die bei kurzzeitigen Spitzenbelastungen auftretenden maximalen Drehmomente reduziert und damit Deformationen von Zähnen des Getriebes vermieden werden. Ein weiterer mit den elastischen Drehmomentenstützen erzielbarer Vorteil liegt in der Schwingungsdämpfung der Antriebsmaschine. Die vorgeschlagene fliegende Halterung von Getriebe, Motor und Bremse an der Treibscheibe ergibt ein kompakte, raumsparende Anordnung der Antriebsmaschine, die leicht montierbar ist und weniger Unterhalt und Reparaturen erfordert.

Im folgenden wird die Erfindung anhand eines auf der Zeichnung dargestellten Ausführungsbeispieles näher erläutert. Es zeigen:
- Fig.1: eine Ansicht der erfindungsgemässen Antriebsmaschine,
- Fig.2: eine Seitenansicht der Antriebsmaschine gemäss Fig.1,
- Fig.3: einen Teil-Querschnitt der Antriebsmaschine in gegenüber der Fig.1 vergrössertem Massstab,
- Fig.4: eine teilweise geschnittene Ansicht einer Drehmomentenstütze der Antriebsmaschine in gegenüber der Fig.1 vergrössertem Massstab und
- Fig.5: eine Seitenansicht der Drehmomentenstütze gemäss Fig.4.

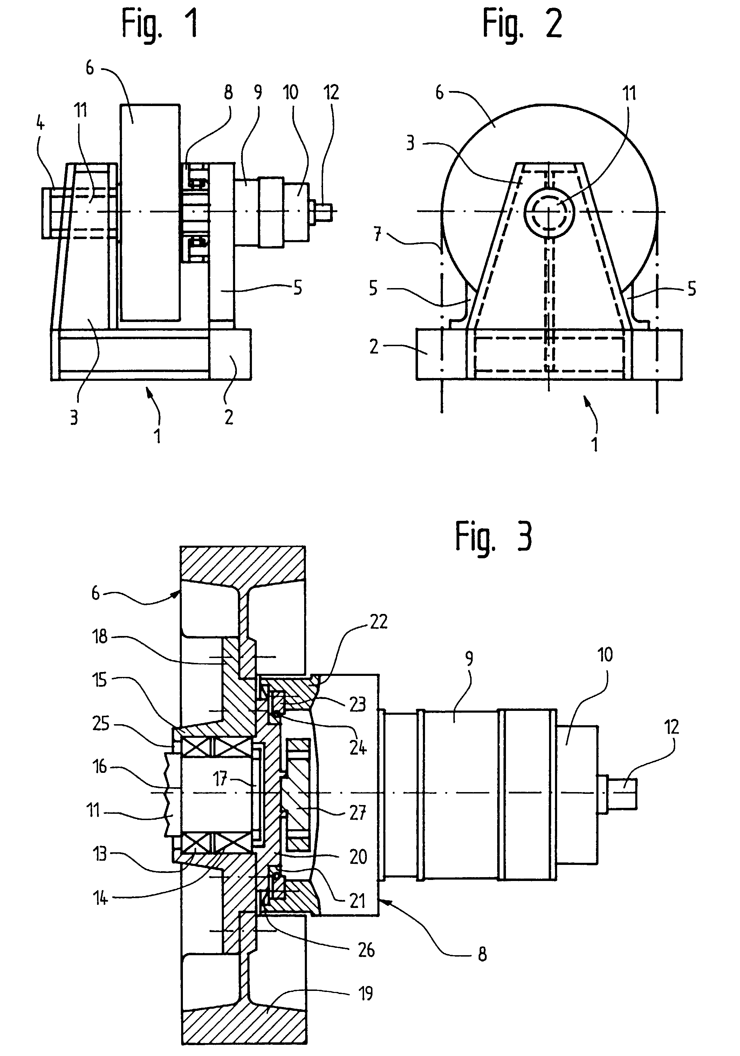

In den Fig.1 und 2 ist mit 1 ein Maschinengestell bezeichnet, bestehend aus einer Grundplatte 2, einem Lagerbock 3 mit Achshalter 4 sowie zwei vertikal angeordnete, elastische Drehmomentstützen 5. Das Maschinengestell 1 ist beispielsweise eine aus mehreren Teilen zusammengesetzte Schweisskonstruktion. Im Achshalter 4 des Lagerbockes 3 ist eine Achse 11 drehsteif befestigt und auch achsial fixiert.

Auf dem herausragenden Ende der Achse 11 ist eine Treibscheibe 6 für den Antrieb von Förderseilen 7 eines Aufzuges drehbar gelagert. Ein Getriebe 8, ein Elektromotor 9, eine Bremse 10 und ein Drehgeber 12 sind gleichachsig zusammengebaut und fliegend an der Treibscheibe 6 angeordnet, wobei sie gegen Verdrehung gesichert mit zwei am Maschinengestell 1 befestigten elastischen Drehmomentstützen 5 in Verbindung stehen.

Gemäss Fig.3 ist die Treibscheibe 6 mittels zweier Wälzlager 13,14, die in einer Nabe 15 sitzen, auf dem freien Ende der Achse 11 gelagert. Die Wälzlager 13,14 werden hierbei zwischen einer Schulter 16 der Achse 11 und einer an der Achse 11 befestigten Abschlussscheibe 17 gehalten. An einem Flansch 18 der Nabe 15 ist ein Treibscheibenkranz 19 befestigt, der am Umfang mit einer Anzahl von durch kurze Striche symbolisierte Rillen für die Förderseile 7 (Fig.1,2) des Aufzuges versehen ist. Der Flansch 18 ist mit einer die Wälzlager 13,14 abdeckenden Adapterplatte 20 verschraubt, an welcher ein erster Lagerring 21 befestigt ist. Ein mit einem Gehäuse 22 des Getriebes 8 verschraubter zweiter Lagerring 23 ist über den ersten Lagerring 21 geschoben, wobei zwischen den Lagerringen 21,23 Wälzkörper in Form von Kugeln 24 angeordnet sind. Die Lagerringe 21,23 und die Kugeln 24 bilden ein Lager, mittels welchem das Getriebe 8 und mit ihm der Elektromotor 9 und die Bremse 10 drehbar an der Treibscheibe 6 gelagert und von dieser getragen werden. Das Treibscheibenlager auf der Achse 11 ist mit einer Dichtung 25 und das Gehäuse 22 des Getriebes 8 mit einer Dichtung 26 abgedichtet. Mit 27 ist ein an der Adapterplatte 20 befestigter Abtriebsteil, beispielsweise eines konventionellen Planetengetriebes bezeichnet.

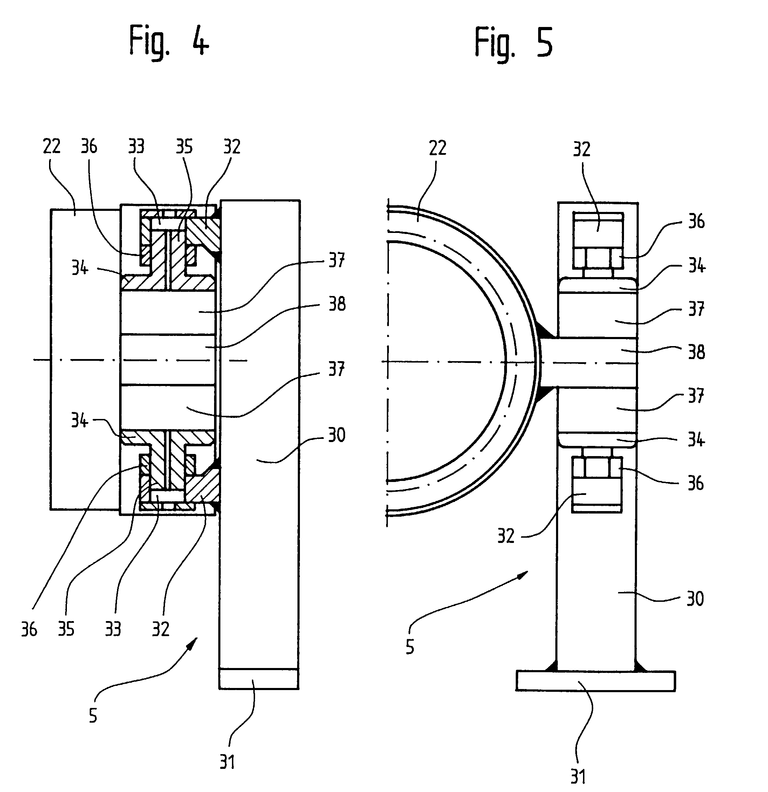

Nach den Fig.4 und 5 besteht die elastische Drehmomentenstütze 5 im vorgestellten Beispiel aus einem Hohlprofil 30 mit quadratischem Querschnitt, an welchem eine Fussplatte 31 und zwei Halter 32, beispielsweise durch Schweissen befestigt sind. In den Haltern 32 sind Bohrungen 33 vorgesehen, deren Achsen fluchten und senkrecht parallel zur Längsrichtung des Hohlprofiles 30 verlaufen. Mit 34 sind zwei Druckplatten bezeichnet, die mit zylindrischen Ansätzen 35 in den Bohrungen 33 der Halter 32 geführt sind. Auf den mit Gewinde versehenen zylindrischen Ansätzen 35 sind Muttern 36 aufgeschraubt, die an den Haltern 32 anliegen. An den Druckplatten 34 sind Dämpfungskörper 37 angeordnet, welche beispielsweise aus elastischem Kunststoff oder Gummi bestehen. Am Gehäuse 22 des Getriebes 8 sind zwei um 180° versetzte, kurze Radialhebel 38 angeschweisst, die zwischen den Dämpfungskörpern 37 gehalten werden, wobei durch Verstellen der Muttern 36 der Abstand zwischen den Druckplatten 34 und damit der Grad der Dämpfung eingestellt werden kann.

Die erfindungsgemässe Anordnung erfüllt die Funktion als federnden und vibrationsgedämpften Antrieb, indem bei Nothalten oder Abfangen der Kabine durch die Fangvorrichtung Spitzenbelastungen und dadurch eventuelle Beschädigungen des Antriebes 8, 9 10 vermieden werden. Durch den konzentrischen und fliegenden Anbau von Bremse 10, Motor 9 und Getriebe 8 sind diese Baugruppen leicht zugänglich für Wartung, Reparaturen und Austausch.

Im Ruhezustand der Antriebsmaschine wird ein durch momentane Lastverhältnisse sich ergebendes Ungleichgewicht zwischen Kabine und Gegengewicht über die Treibscheibe 6, das Getriebe 8, den Motor 9 und die geschlossene Bremse 10 in die elastische Drehmomentstütze 5 geleitet und dort als Lastdrehmoment aufgefangen. Durch die elastische Ausführung der Drehmomentstütze 5 ist die sich bei einem Ungleichgewicht zwischen Kabine und Gegengewicht sich ergebende Auslenkung in der einen oder anderen Drehrichtung ein Mass für eine vorhandene treibende oder bremsende Last bezogen auf die Kabine. Diese Information kann in der Kommandosteuerung verwendet werden für eine Optimierung der Rufbedienung und in einer Antriebsregelung zwecks Kompensation des Anfahrdrehmomentes zur Vehütung des Zurücksackens der Kabine beim Anfahren mit lastbedingtem Gegendrehmoment. Bei Antrieben mit ungeregeltem Drehstrommotor wird der Anfahrruck reduziert.

Als Getriebe 8 bzw. Antriebe 8, 9, 10 können anstelle des erwähnten Planetengetriebes verschiedene weitere Typen und Bauarten verwendet werden, wie beispielsweise die unter der Produktbezeichnung "Harmonic Drive" und "Cyclo Drive" bekannt gewordenen Alternativtypen.

Als Motor 9 kann in einer weiteren Variante auch ein Hydraulikmotor oder ein Druckluftmotor verwendet werden.

Die Ausführung des Maschinengestelles 1 beschränkt sich nicht nur auf eine Schweisskonstruktion. Es sind auch Ausführungen in gegossener Form oder als Baukastensystem mit Normteilen möglich.

## Patentansprüche

1. Antriebsmaschine für Aufzüge, mit einem Antrieb (8,9,10), und einer auf einer festehenden Achse (11) drehbar gelagerten und abgestützten Treibscheibe (6), die gleichachsig an einem Maschinengestell (1) angeordnet sind, dadurch gekennzeichnet, dass die Treibscheibe (6) konzentrisch, über einen Antrieb (8,9,10) mit mindestens einer elastischen Drehmomentstütze (5), als Sicherung gegen Verdrehung des Antriebes (8,9,10) in Bezug auf das Maschinengestell (1), gekuppelt ist.

2. Antriebsmaschine nach Anspruch 1, dadurch gekennzeichnet, dass ein an einer Adapterplatte (20) der Treibscheibe (6) befestigter erster Lagerring (21), ein an einem Gehäuse (22) des Antriebes (8,9,10) befestigter zweiter Lagerring (23) und zwischen den Lagerringen (21,23) angeordnete Wälzkörper (24) ein Lager bilden, mittels welchem der Antrieb (8,9,10) von der Treibscheibe (6) getragen wird.

3. Antriebsmaschine nach Anspruch 1, dadurch gekennzeichnet, dass am Gehäuse (22) des Getriebes (8) mindestens ein Radialhebel (38) für die Halterung an den elastischen Drehmomentenstützen (5) angeordnet ist.

4. Antriebsmaschine nach Anspruch 3, dadurch gekennzeichnet, dass die elastischen Drehmomentenstützen (5) aus mindestens einem Halter (32) und einer Fussplatte (31) bestehen, wobei die Halter (32) Druckplatten (34) mit an Radialhebeln (38) mindestens an einer Seite anliegenden Dämpfungskörpern (37) aufweisen.

5. Antriebsmaschine nach Anspruch 4, dadurch gekennzeichnet, dass der Abstand zwischen Druckplatte (34) und Halter (32) einstellbar ist.

6. Antriebsmaschine nach Anspruch 4, dadurch gekennzeichnet, dass die Dämpfungskörper (37) aus einem elastischem Material mit innerer Dämpfung bestehen.

7. Antriebsmaschine nach Anspruch 1, dadurch gekennzeichnet, dass der Antrieb (8,9,10) ein Planetengetriebe aufweist.

8. Antriebsmaschine nach Anspruch 1, dadurch gekennzeichnet, dass der Antrieb (8,9,10) ein "Harmonic Drive" aufweist.

9. Antriebsmaschine nach Anspruch 1, dadurch gekennzeichnet, dass der Antrieb (8,9,10) ein "Cyclo Drive" aufweist.

## Claims

1. Driving machine for lifts, with a drive pulley (6), which is rotatably mounted and supported on a stationary axle (11), and a drive (8, 9, 10) which are arranged co-axially at a machine frame (1), characterised in that the drive pulley (6) is concentrically coupled by way of the drive (8, 9, 10) with at least one elastic torque stay (5) as protection against rotation of the drive (8, 9, 10) relative to the machine frame (1).

2. Driving machine according to claim 1, characterised in that a first bearing ring (21) fastened at an adapter plate (20) of the drive pulley (6), a second bearing ring (23) fastened at a housing (22) of the drive (8, 9, 10) and rolling bodies (24) arranged between the bearing rings (21, 23) form a bearing by means of which the drive (8, 9, 10) is carried from the drive pulley (6).

3. Driving machine according to claim 1, characterised in that at least one radial lever (38) for the mounting at the elastic torque stays (5) is arranged at the housing (22) of the gear (8).

4. Driving machine according to claim 3, characterised in that the elastic torque stays (5) consist of at least one mount (32) and a pedestal plate (31) wherein the mounts (32) comprise pressure plates (34) with damping bodies (37) lying against at least one side of radial levers (38).

5. Driving machine according to claim 4, characterised in that the spacing between the pressure plate (34) and the mount (32) is adjustable.

6. Driving machine according to claim 4, characterised in that the damping bodies (37) consist of an elastic material with internal damping.

7. Driving machine according to claim 1, characterised in that the drive (8, 9, 10) comprises a planetary gear.

8. Driving machine according to claim 1, characterised in that the drive (8, 9, 10) comprises a "harmonic" drive.

9. Driving machine according to claim 1, characterised in that the drive (8, 9, 10) comprises a "CYCLO" drive.

## Revendications

1. Moteur d'entraînement pour ascenseurs, comportant un entraînement (8, 9, 10) et une poulie motrice (6) montée en rotation et supportée sur un axe fixe (11), qui sont disposés coaxialement sur un bâti de moteur (1), caractérisé en ce que la poulie motrice (6) est accouplée de façon concentrique, par l'intermédiaire d'un entraînement (8, 9, 10), à au moins un support de couple de rotation élastique (5), comme protection à l'encontre d'une rotation de l'entraînement (8, 9, 10) par rapport au bâti de machine (1).

2. Moteur d'entraînement selon la revendication 1, caractérisé en ce qu'un premier anneau de palier (21) fixé à une plaque de raccord (20) de la poulie motrice (6), un second anneau de palier (23) fixé à un carter (22) de l'entraînement (8, 9, 10), et des corps de roulement (24) disposés entre les anneaux de palier (21, 23) forment un palier à l'aide duquel l'entraînement (8, 9, 10) est porté par la poulie motrice (6).

3. Moteur d'entraînement selon la revendication 1, caractérisé en ce qu'au moins un levier radial (38) pour la fixation aux supports de couple de rotation élastiques (5) est disposé sur le carter (22) de l'engrenage (8).

4. Moteur d'entraînement selon la revendication 3, caractérisé en ce que les supports de couple de rotation élastiques (5) se composent d'au moins une attache (32) et d'une semelle (31), les attaches (32) comportant des plaques de pression (34) avec des organes amortisseurs (37) appliqués au moins unilatéralement contre les leviers radiaux (38).

5. Moteur d'entraînement selon la revendication 4, caractérisé en ce que l'écartement entre la plaque de pression (34) et l'attache (32) est réglable.

6. Moteur d'entraînement selon la revendication 4, caractérisé en ce que les organes amortisseurs (37) se composent d'un matériau élastique à capacité d'amortissement interne.

7. Moteur d'entraînement selon la revendication 1, caractérisé en ce que l'entraînement (8, 9, 10) comporte un engrenage planétaire.

8. Moteur d'entraînement selon la revendication 1, caractérisé en ce que l'entraînement (8, 9, 10) comporte un "Harmonic Drive".

9. Moteur d'entraînement selon la revendication 1, caractérisé en ce que l'entraînement (8, 9, 10) comporte un "Cyclo Drive".
